# FASCICULE DE BREVET EUROPEEN

(11) **EP 1 079 698 B1**
(45) Date de publication et mention de la délivrance du brevet: **28.08.2002**
(21) Numéro de dépôt: 99918050.8
(22) Date de dépôt: 11.05.1999
(51) Int. Cl.: A23C 19/09

(54) **PRODUIT COMPOSITE A BASE DE FROMAGE ET PROCEDE DE FABRICATION**
ZUSAMMENGESETZTES KÄSEPRODUKT UND VERFAHREN ZU DESSEN HERSTELLUNG
COMPOSITE PRODUCT BASED ON CHEESE AND METHOD FOR MAKING SAME

(30) Priorité: 18.05.1998 FR 9806256
(43) Date de publication de la demande: 07.03.2001
(73) Titulaire: FROMAGERIES BEL, 75008 Paris (FR)
(72) Inventeur: FONTENILLE, Hélène, 39570 Macornay (FR)
(74) Mandataire: Jacobson, Claude
(86) Numéro de dépôt international: FR9901122
(87) Numéro de publication internationale: WO99059420

(56) Documents cités:
- EP-A- 0 128 963
- EP-A- 0 260 194
- DE-U- 29 620 117
- FR-A- 728 807
- FR-A- 2 386 235
- FR-A- 2 411 539
- FR-A- 2 650 484
- GB-A- 990 068
- US-A- 1 721 406

## Description

La présente invention concerne l'industrie fromagère. Elle concerne plus particulièrement des produits fromagers composites comportant une pâte fromagère externe désignée également par coque externe et un fourrage interne de texture identique ou différente, la pâte fromagère externe étant composée de fromage fondu.

Elle concerne également un procédé de fabrication de tels produits.

On connaît des produits alimentaires qui comportent des pâtes fromagères associées à d'autres fromages ou spécialités fromagères ou d'autres produits alimentaires.

De manière générale, dans le cas d'association de pâtes fromagères, on fait adhérer l'un à l'autre des blocs distincts de fromages ou ces derniers sont fourrés de pâtes différentes au moyen d'un agent liant utilisé dans les industries agro-alimentaires.

On peut citer en exemple les brevets FR 2 411 539, FR 2 475 301 et FR 2 504 781 qui décrivent des fromages réalisés en plusieurs étapes distinctes et successives, formés de plusieurs couches de pâtes fondues.

De façon générale, la pâte externe est une pâte homogène fondue qui permet d'assurer une bonne tenue mécanique au produit fini, et la technique de fabrication est celle d'un fromage fondu.

Les documents EP-A-102 232, EP-A-130 740 et EP-A-130 772 décrivent des techniques d'extrusion permettant de réaliser des produits alimentaires marbrés ou comportant une pâte externe entourant une pâte interne.

Toutefois, ces dernières techniques employées sont adaptées à la confiserie ou à des produits à base de farine et ne conviennent pas aux fromages.

On connaît en outre du document EP-A-260 194, un procédé de fabrication de produits composites formés d'une pâte fromagère formant une coque de texture voisine de celle du produit original et d'un second produit formant fourrage et enfermé dans la coque.

Ce procédé comporte une première étape d'addition de protéines au fromage ainsi qu'une étape ultérieure de traitement mécanique et de mise en forme du produit traité. Ce procédé est toutefois limité dans sa réalisation d'une part par la matière première mise en oeuvre qui est un fromage affiné à pâte pressée ayant un extrait sec (ES) d'au moins 50% et, d'autre part, par deux étapes de réalisation distinctes.

On connaît également du document EP-A-358 983 un procédé de réalisation d'un fromage composite dont l'extérieur est constitué d'un caillé frais égoutté lactique ou présure et le coeur d'un fromage frais de nature différente de l'enrobage afin de créer un contraste de texture ; le procédé mis en oeuvre pour la réalisation de ce produit est la co-extrusion.

De plus, le document EP-A-727 138 décrit la réalisation par co-extrusion d'un produit fromager composite dont l'extérieur est constitué par malaxage, texturation et cuisson de caillé frais et le coeur de fromage ou autre produit alimentaire, de façon à créer un contraste de texture.

Le document FR-A-728 807 décrit la fabrication d'un produit formé de viande et de fromage. Le document GB-A-990 068 divulgue un procédé d'enrobage de petites pièces de fromage dur dans le fromage constituant l'enveloppe externe, à l'état fondu. Le document DE-U-296 20 117 décrit un produit alimentaire formé d'une enveloppe externe et un fromage fondu contenant un fourrage totalement inclus dans l'enveloppe externe et formé d'un produit pasteurisé. Le document US-A-1 721 406 décrit un produit comprenant un fourrage constitué d'une pièce de viande enrobée à l'aide d'un fromage. Le document EP-A-0 128 963 divulgue un procédé et une installation de fabrication de portions alimentaires multicouches.

Le document EP-A-128 963 décrit bien la réalisation de fromages composites comportant des couches alternées séparées, à base de fromage fondu par une technique de dosage à chaud, la réalisation de ces produits se faisant en plusieurs étapes en faisant intervenir un moule intermédiaire avec des parois permettant la délimitation des différentes pâtes au moment de la coulée et le produit gélifié étant ensuite transféré dans son emballage définitif. Toutefois, ce procédé concerne des produits formés de plusieurs pâtes sous forme de couches ou bandes séparées qui sont toutes à base de fromage fondu.

Par ailleurs, la demanderesse a déjà décrit dans le brevet FR 2 650 484 la réalisation d'un produit composite à base de fromage comportant une coque externe ferme et une pâte interne de consistance plus molle selon la technique dite "one-shot" qui consiste en un co-dosage et co-moulage de deux constituants qui réalisent respectivement la coque et le fourrage.

Dans ce document, la coque externe est réalisée à partir d'un concentré laitier non coagulé mais comportant un agent de coagulation (présure, agent acidifiant) et c'est au moment du co-moulage que se réalise la prise en masse ou gélification de la coque externe.

Ainsi, le procédé décrit permet d'obtenir des coques fromagères à partir de concentrés protéiques laitiers et non de fromage fondu et le co-dosage et co-moulage s'effectuent à froid (30 à 50° C).

De manière générale, les procédés mis en oeuvre dans les techniques précédemment citées sont soit la coulée successive à chaud des pâtes fondues différentes pour obtenir des couches superposées constituées de produits différents, soit la co-extrusion qui permet d'obtenir des produits comportant un enrobage et un coeur de texture et/ou de nature différente. A la date d'aujourd'hui, cette dernière technique qui permet d'obtenir des produits à enrobage et fourrage n'est réalisée que sur des produits froids. En effet, il n'a jamais été décrit ou effectué de co-extrusion sur des produits chauds.

Par ailleurs, la technique décrite ne permet pas, du fait de ses caractéristiques (cisaillement) d'obtenir un enrobage sous forme de gel homogène et continu. En effet, son application à des produits déjà gélifiés aurait pour conséquence la déstructuration de gel qui ne serait de ce fait plus continu.

A ce jour, on ne connaît par conséquent pas de produit fromager de type comportant une coque externe formée par un gel de fromage fondu, homogène et continu et un fourrage interne constitué de fromage fondu et éventuellement d'autres produits alimentaires.

L'invention a pour objectif de répondre à cette demande. Pour cela, elle met en oeuvre un procédé de co-dosage à chaud des constituants, c'est-à-dire au-delà du point de gélification des protéines, puis un refroidissement en statique qui permet une gélification continue.

Un second objectif de la présente invention est de proposer un produit composite à base de fromage de type comportant une coque externe et un fourrage interne totalement inclus dans la coque externe, au moins la coque externe étant à base d'un fromage fondu.

Un autre objectif de la présente invention concerne également le procédé de fabrication d'un fromage composite du type précité.

Le but de la présente invention a été atteint en adaptant la technique de co-dosage et co-moulage décrite dans FR-A-2 650 484 à une pâte fromagère fondue pour la réalisation de la coque externe, et en tirant partie des propriétés particulières des fromages fondus notamment leur aptitude au crémage qui permet le passage de l'état sol à l'état gel.

L'invention a ainsi pour objet un produit fromager composite de type comportant une coque externe et un fourrage interne totalement inclus dans la coque externe, au moins ladite coque externe étant obtenue à partir d'un fromage fondu présentant une aptitude au crémage.

Dans l'invention, le terme "fromage fondu" ou "pâte fromagère fondue" désigne le produit obtenu par la fonte à chaud en présence ou non de sels de fonte de fromages et/ou d'autres produits laitiers (beurre, crème, poudre de lait, de lactosérum), voire de protéines et de matières grasses d'origine végétale ; d'autres additifs (gélifiants, épaississants) peuvent également être présents dans la formule.

Par aptitude au crémage, on entend la propriété des fromages fondus à épaissir sous l'action du double phénomène de:
- peptisation des protéines permettant l'hydratation des chaînes et aboutissant au gonflement du milieu et à l'augmentation de la viscosité ; et
- d'insertion des pyrophosphates de Ca formés au cours du traitement thermique entre les chaînes protéiques pour former des liaisons ioniques inter- et intra-protéiques entraînant la gélification du réseau (Le fromage, A. Eck, J.C. Oillis, Ed. Lavoisier, Technique et documentation, 1997).

Le fourrage peut consister en une pâte fromagère fondue ou autre ou en un produit alimentaire de nature différente, notamment un coulis.

Avantageusement, la coque externe et le fourrage interne sont réalisés par co-dosage et co-moulage à chaud de la pâte fromagère fondue formant la coque externe et du produit alimentaire formant le fourrage, la température mise en oeuvre lors de ces étapes étant supérieure à la température de gélification du fromage fondu constituant la coque externe.

L'invention a donc également pour objet un procédé de fabrication d'un produit composite à base de fromage de type comportant une coque externe et un fourrage interne totalement inclus dans la coque externe, au moins ladite coque externe étant obtenue à partir d'un fromage fondu présentant une aptitude au crémage, le procédé étant caractérisé en ce que l'on réalise à chaud le co-dosage des constituants formant respectivement la coque externe et le fourrage et que l'on introduit lesdits constituants simultanément dans un moule où ils sont refroidis au moins jusqu'à une température inférieure à la température de gélification de la pâte fromagère fondue constituant la coque externe.

Ainsi, la réalisation du procédé de l'invention est basée sur l'utilisation des propriétés spécifiques du fromage fondu, notamment son aptitude à "crémer" permettant le passage de l'état SOL à un état GEL.

Le passage de l'état SOL à l'état GEL s'effectue lors du refroidissement à une température inférieure à 50° C. Ce refroidissement s'effectue en statique ce qui permet d'obtenir un gel continu. Il est réalisé après dosage dans l'emballage et mise en forme du produit.

Dans le cadre de la présente invention ce changement d'état est recherché pour la formation de l'enrobage externe mais sera facultatif pour le fourrage central, notamment dans le cas où on recherche un coeur "coulant" de fromage fondu.

L'une des caractéristiques essentielles de l'invention est la réalisation du co-dosage à chaud, ce qui présente deux avantages :
1) le fromage est dosé à une température supérieure à celle de gélification des protéines, c'est-à-dire quand le produit est à l'état SOL, et c'est au cours du refroidissement qu'il se transforme en GEL qui fige la forme ; la température de dosage, supérieure au point de gélification des produits sera supérieure à 70°C et de préférence comprise entre 70 et 90°C.
2) la température élevée permet d'assainir le produit et ainsi de garantir de bonnes qualités hygiéniques et une conservation plus longue.

L'invention sera mieux comprise à partir de la description qui suit:
On part d'une pâte fromagère fondue et d'un produit destiné à former le fourrage interne consistant en un fromage ou non, les constituants présentant une viscosité voisine lors du co-dosage et de l'introduction dans le moule. Ainsi, le constituant qui forme le coeur ou fromage interne peut être du fromage fondu, du fromage frais fondu, du fromage frais ou encore des pâtes alimentaires de type coulis ayant, au moment du co-dosage et d'introduction dans le moule, une viscosité voisine de celle du fromage fondu destiné à former la coque externe.

Par viscosités voisines, on entend que les composants formant la coque externe et du fourrage présentent pendant l'étape simultanée de co-dosage et d'introduction dans le moule une différence de viscosité inférieure à 30 poises (3 Pa.s) sous un cisaillement de 150 s⁻¹.

Cette condition de voisinage de viscosité des deux pâtes est particulièrement importante au moment de l'introduction dans le moule des deux pâtes pour obtenir un produit final avec deux composants bien distincts et non mélangés.

Au moment du co-dosage et de l'introduction dans le moule, la viscosité apparente des deux composants est avantageusement comprise entre 5 à 50 poises (0,5 à 5 Pa.s) mesurée à 80° C sous un cisaillement de 150 s⁻¹.

En effet, la viscosité apparente ne doit pas être trop faible car à cette viscosité, les pâtes seraient trop fluides et se mélangeraient l'une à l'autre au moment de l'introduction dans le moule ; elle ne doit pas être non plus trop élevée car, dans ce cas, les pâtes seraient d'une fermeté difficilement compatible avec le procédé de co-dosage et d'introduction dans le moule mis en oeuvre de manière simultanée.

Par ailleurs, au moment du dosage, les pâtes présentent avantageusement des pH voisins. Le pH des deux produits est préférentiellement compris entre 5,0 et 5,8, des pH acides (pH < 4,5) étant peu souhaitables en raison de la déstabilisation du produit qui en résulterait.

Par "pH voisins", on entend un écart de pH non supérieur à 0.5 unités, à la température de co-dosage et d'introduction dans le moule des constituants.

En outre, les pâtes présentent avantageusement des extraits secs voisins.

Par "extraits secs voisins", on entend un écart non supérieur à 5 % en poids.

Cette proximité de pH ainsi que celle d'extrait sec sont également importantes pour un bon maintien de la forme et des qualités organoleptiques du produit au cours de la conservation du produit.

Le co-dosage des constituants s'effectue à une température de préférence comprise entre 70 et 90° C.

Les figures annexées illustrent la mise en oeuvre du procédé de l'invention. Pour de plus amples détails, on pourra se reporter à la description et aux figures du brevet français précité, FR-A-2 650 484.

Pour faciliter la compréhension du texte, l'installation mise en oeuvre est toutefois représentée dans les Figures 1 et 2A à 2D annexées, sur lesquelles :
- la figure 1 est une vue en coupe de l'installation utilisée pour la mise en oeuvre du procédé de l'invention ;
- les figures 2A à 2D représentent schématiquement les étapes du procédé de co-moulage du fromage fondu et de la pâte formant le fourrage interne.

En outre, les figures suivantes 3 à 5 représentent des schémas de têtes de coulées et de produits obtenus selon l'invention.

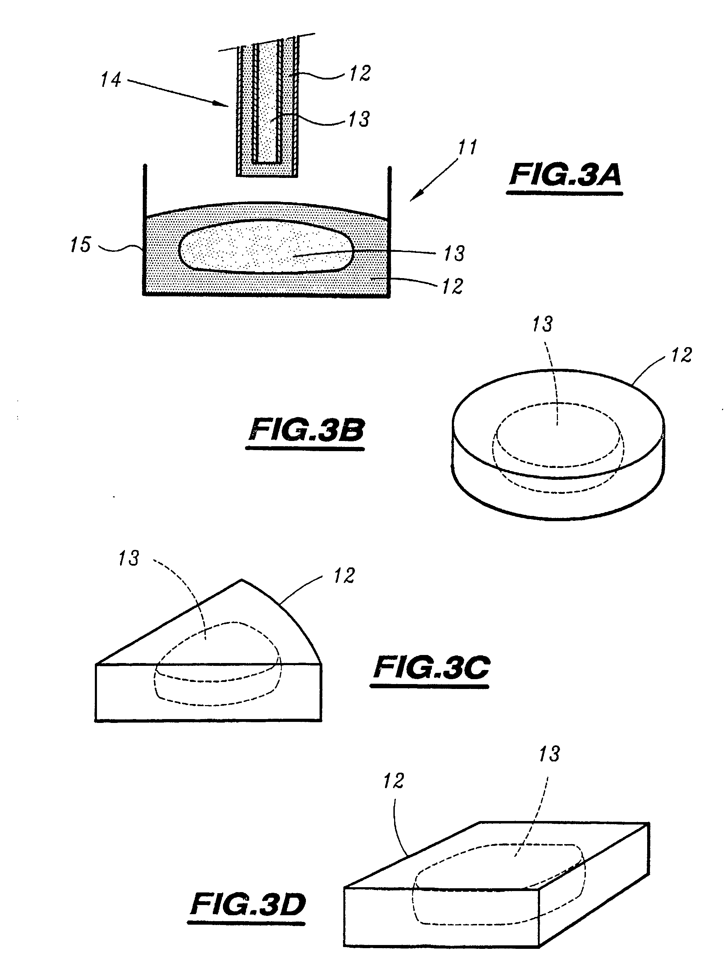

Ainsi, la figure 3A est une vue en coupe longitudinale des tubes de dosage d'une portion fromagère et de celle-ci reçue dans son emballage définitif, représentés en fin de coulée; les figures 3B, 3C et 3D représentant en perspective des produits de forme appropriée à ce type de conditionnement ;

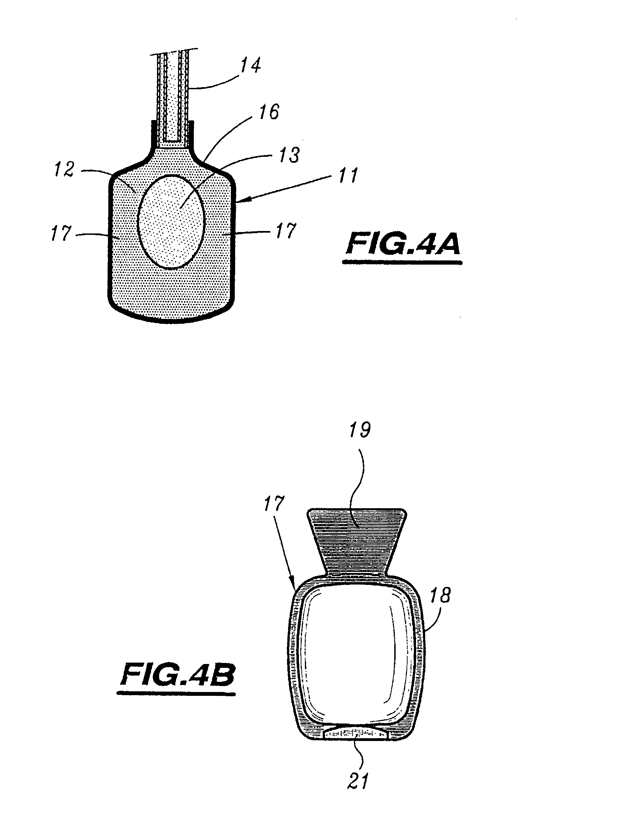

- la figure 4A est une vue en coupe longitudinale des tubes de dosage d'une portion fromagère et de celle-ci reçue dans son emballage définitif en forme de coquille composite (ou bi-coque) en fin de coulée, et la figures 4B représente une portion fromagère vue en élévation dans son conditionnement en forme de bi-coque ;

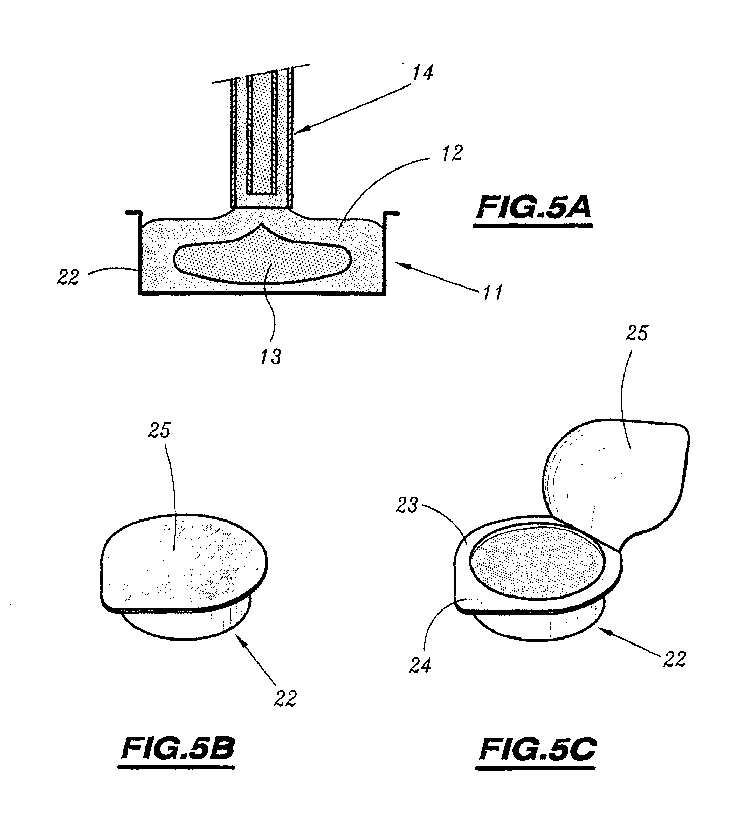

- la figure 5A représente en coupe longitudinale des tubes de dosage d'une portion fromagère dans son emballage en forme de coupelle, la figure 5B représentant en perspective la coupelle munie d'un opercule et la figure 5C la même coupelle contenant le produit selon l'invention après ouverture de l'opercule.

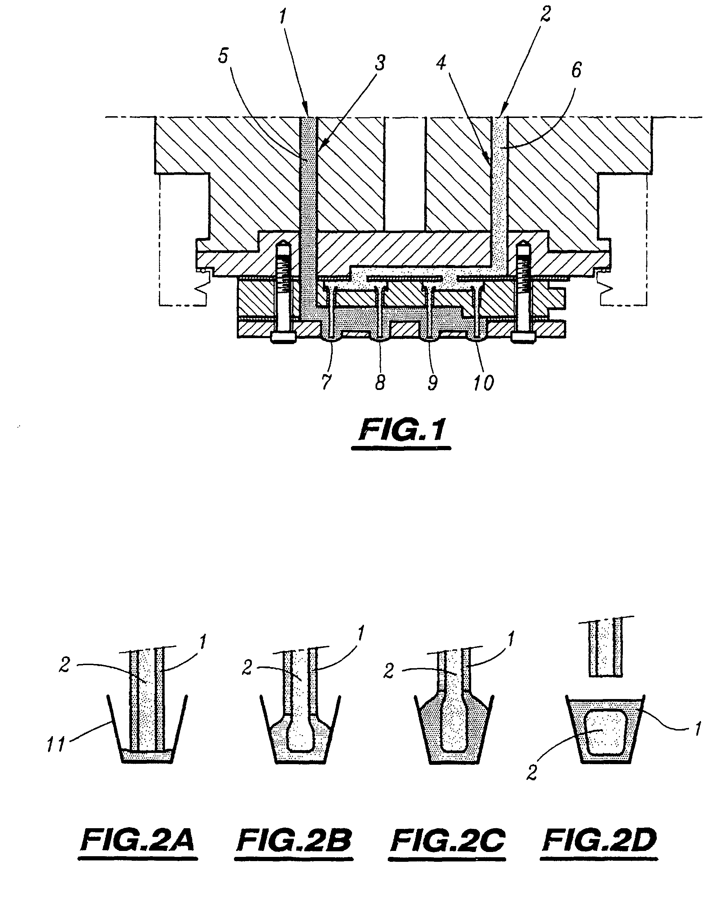

La figure 1 est une vue de l'installation utilisée pour la mise en oeuvre du procédé dans lequel la mise en forme du produit final est réalisée en une seule opération selon la technique dite "one shot". Ce procédé consiste en un co-dosage et un co-moulage simultanés des deux constituants qui réaliseront respectivement la coque et le fourrage et qui pourront représenter un goût. une texture et une consistance très différents.

Pour cela, le constituant 1 formant la pâte fromagère destinée à réaliser l'enrobage externe et le constituant interne 2 avantageusement sous forme de pâte sont envoyés dans des trémies différentes non représentées sur la figure au bas desquelles sont fixées des buses 3 et 4. L'écoulement dans les buses est commandé par deux pistons (un pour chaque produit), non représentés sur la figure, qui permettent de régler de manière synchronisée la quantité de produit délivrée lors de chaque opération de co-dosage.

La buse 3 reçoit la pâte 1, tandis que la buse 4 reçoit la pâte 2. Les constituants sont alors amenés respectivement au moyen des conduits 5 et 6 au niveau de quatre tubes de dosage parallèles 7, 8, 9 et 10, sous lesquelles viennent se placer les moules de formage.

Les pistons envoient ensuite les deux constituants dans les réceptacles de formage 11 où le co-dosage se réalise comme illustré sur les Figures 2A à 2D.

Dans une première étape (2A), on commence par faire couler la pâte 1 constituant la coque jusqu'à ce qu'il y ait au fond du réceptacle une couche de pâte dont l'épaisseur correspond à l'épaisseur de la coque souhaitée:
- dans les étapes 2B et 2C, tout en maintenant l'écoulement de la pâte 1, le constituant de la pâte interne 2 prend sa place dans le réceptacle durant un temps correspondant à la quantité de fourrage désiré ;
- puis, dans l'étape 2D, on termine par une couche de pâte externe.

Le produit dosé est refroidi à une température inférieure à 50° C de façon à obtenir une gélification de la pâte externe, ce qui permet l'obtention d'une coque ferme autour du fourrage.

Selon la forme du réceptacle et les caractéristiques de texture, de goût et de consistance des deux constituants, on obtient une large gamme de produits nouveaux et originaux.

Comme expliqué précédemment, la couche externe ou enrobage, est constituée de fromage fondu pour lequel les propriétés de crémage sont recherchées ; on peut également mais non obligatoirement incorporer, dans la formule du fromage fondu, des protéines d'oeuf ou des protéines de sérum ces protéines permettent d'obtenir un gel non réversible au réchauffage et facilitent la fonction de l'enrobage en tant que coque maintenant de façon stable le coeur.

L'ajout d'éléments de ce type est recherché notamment pour les produits à consommer après réchauffage ; en effet, elles coaguleront sous l'effet de la température en permettant le maintien de la forme du produit.

Dans ce cas, les températures de chauffage sont avantageusement inférieures à la température de coagulation de ces protéines, de façon à ce que celles-ci ne coagulent qu'au moment du réchauffage du produit (réchauffage par bain-marie ou passage dans un four).

Bien entendu, le fromage fondu constitutif de l'enrobage pourra être également aromatisé ou enrichi en éléments figurés.

Le fourrage ou coeur est constitué soit de fromage fondu. de nature identique ou différente de celui de la coque, soit de caillé ou fromage frais, soit de tout autre produit alimentaire se présentant avantageusement sous forme de coulis et ayant une viscosité et un pH compatibles avec le fromage fondu constitutif de la coque externe, comme décrit ci-dessus.

Bien entendu, le produit constitutif du coeur pourra être aromatisé et/ou foisonné.

Le taux pondéral du constituant du coeur par rapport au produit fini est compris entre 10 et 50 %, 10 % représentant le seuil d'obtention d'une sensation en bouche et 50 % le seuil au-delà duquel le procédé ne peut plus être mis en oeuvre.

La coque externe constitue donc de 50 à 90 % en poids par rapport au poids total du produit fini.

Les produits obtenus sont conditionnés dans tout type d'emballage bien connu de l'homme du métier ; de façon préférentielle, ils sont conditionnés directement dans des coques d'aluminium, dans des "bi-coques" ou des coupelles operculables, par exemple en matériau plastique ou autre matériau adapté.

La figure 3A représente un mode de réalisation dans lequel une portion fromagère 11 formée des constituants 12 et 13 formant respectivement la coque externe et le fourrage interne, sont envoyés par l'intermédiaire d'un tube de dosage 14, dans un réceptacle d'aluminium 15 de la même manière que celle décrite en rapport avec la figure 1, le constituant 12 étant coulé dans le réceptacle 15 jusqu'à obtention au fond du réceptacle d'une couche de pâte dont l'épaisseur correspond à celle de la coque souhaitée, puis pendant que l'écoulement du constituant 12 est maintenu, le constituant de la pâte interne 13 prend sa place dans le réceptacle durant un temps correspondant à la quantité de fourrage désiré, le processus étant suivi par la coulée d'une couche de constituant externe 12.

Ce mode de réalisation permet de réaliser des produits de forme variable, notamment cylindrique (3B), sous forme de portion triangulaire (3C) et parallélépipédique de section carrée (3D), comprenant une coque externe de fromage fondu et un fourrage interne totalement inclus dans la coque externe.

La figure 4A représente un mode de réalisation dans lequel la portion fromagère 11 formée des constituants 12 et 13 formant respectivement la coque externe et le fourrage interne sont envoyés par l'intermédiaire d'un tube de dosage 14 dans un réceptacle 16. Ce dernier est formé comme connu en soi de deux demi-coquilles identiques disposées symétriquement. Elles sont assemblées l'une à l'autre suivant un rebord extérieur périphérique 18 afin de délimiter un espace clos dans lequel est confinée la portion fromagère.

Chaque demi-coquille 17 est formée d'un film de polymère conformé en creux notamment par soufflage dans un moule de forme approprié. Le creux ainsi défini est bordé par le rebord périphérique plan 18 destiné à l'assemblage des deux demi-coquilles.

Sur la figure 48, l'emballage présente une forme rectangulaire.

Sur cette figure, les demi-coquilles présentent un axe longitudinal.

Suivant cet axe, le rebord périphérique 18 de chaque demi-coquille est prolongé d'un côté par une patte ou oreille 19 formant un organe de préhension. Du côté opposé, le rebord 18 de chaque demi-coquille présente un prolongement plat 21. Ces prolongements sont destinés à être solidarisés l'un sur l'autre, notamment par thermoscellage après remplissage de la coquille. Ils constituent ainsi la zone d'obturation terminale des deux demi-coquilles.

Pour réaliser la pâte fromagère ainsi conditionnée, la coquille externe formant l'emballage est d'abord réalisée par assemblage de deux demi-coquilles suivant leur rebord périphérique. Les deux demi-coquilles sont solidarisées l'une à l'autre suivant l'essentiel de la longueur de ce rebord par thermoscellage.

Comme représenté sur la figure 4A, les deux demi-coquilles sont laissées disjointes entre les deux prolongements 21. L'intervalle de la coquille délimité définit un passage d'introduction des tubes de dosage 14. La coulée dans la coquille 16 du constituant de la coque externe 12 et du fourrage interne 13 est réalisée de manière analogue à celle décrite en regard des figures 2A à 2D.

Après achèvement de la coulée, le tube de dosage 14 est extrait et les deux prolongements 21 sont appliqués et soudés solidement l'un contre l'autre. A cet effet, ils sont par exemple pressés entre deux mors chauffants afin d'assurer leur solidarisation par thermoscellage.

Après cette opération, la coquille 16 est alors hermétiquement scellée, garantissant l'isolement de la portion fromagère de l'environnement externe.

Pour consommer la portion fromagère ainsi conditionnée, le consommateur saisit une oreille 19 dans chaque main. Par traction sur celle-ci, il écarte les deux demi-coquilles qui s'articulent autour de la charnière formée des deux prolongements 21, laissant apparaître la portion fromagère.

La figure 5A représente un mode de réalisation, dans lequel la portion fromagère 11, formée des constituants 12 et 13 formant respectivement la coque externe et le fourrage interne sont envoyés par l'intermédiaire d'un tube de dosage 14 dans une coupelle thermoformée 22 selon le procédé décrit en relation avec la figure 1.

Comme représenté sur la figure 5C, la coupelle thermoformée 22 comprend un rebord périphérique plan 23, se prolongeant d'un côté par une patte 24 formant un organe de préhension.

La coulée dans la coupelle 22 du constituant de la coque externe 12 et du fourrage interne 13 est réalisée de manière analogue à celle décrite en regard des figures 2A à 2D.

Après remplissage de la coupelle 22 et retrait des tubes de dosage 14, un opercule 25 de forme et dimensions correspondant à celle de la coupelle et du rebord périphérique plan 23 est appliqué sur le rebord 23 et thermoscellé à celui-ci, comme représenté sur la figure 5B.

Pour consommer la portion fromagère ainsi conditionnée, le consommateur saisit la patte 24 et par traction sur l'opercule 25 détache celui-ci du rebord 23 laissant apparaître la portion fromagère, comme représenté sur la figure 5C.

En variante, les produits peuvent également être co-dosés à chaud dans un moule intermédiaire où se réalisera l'étape de gélification lors du refroidissement, puis après refroidissement, ils sont démoulés et enrobés soit sous un enrobage comestible à base de lipides, protéines ou de polysaccharides, soit d'une cire alimentaire, avant d'être conditionnés dans l'emballage définitif.

Par ailleurs, les produits peuvent présenter toute forme et ont un grammage compris entre 5 et 200 g, de préférence 5 à 50 g.

L'invention sera illustrée à l'aide d'exemples ci-après donnés à titre illustratif.

### EXEMPLE 1

### Bouchée fourrée pour grignotage en fin de repas

### Formulation du constituant de la coque externe :

- emmenthal 15%
- cheddar 20 %
- beurre 10,5%
- lait écrémé 3 %
- protéine de lait 4 %
- réemploi (préfonte) 5 %
- sels de fonte 1,5 %
- NaCI 0,6 %
- gélatine 2 %
- carraghénanes 0.5 %
- colorant orangé 0,003 %
- eau 44, 8 %.

L'ensemble des ingrédients est mélangé et chauffé sous cisaillement intense à 110° C.

Le produit est refroidi à 90° C et transféré dans l'une des deux cuves de dosage de la machine.

Ce produit servira de pâte externe. Il a un extrait sec de 41 %, un rapport matière grasselextrait sec de 48 % et un pH de 5,50.

### Formulation du fourrage :

La pâte interne est fabriquée simultanément et parallèlement à la pâte externe.
- Brie 30%
- Cheddar 19%
- Fromage 14%
- Beurre 12,5%
- Caillé frais 10%
- Protéines de lactosérum 3 %
- Sels de fonte 0,8%
- NaCI 0,6 %
- Réemploi (préfonte) 5 %
- Eau 24,1%.

### Procédé de préparation :

L'ensemble des ingrédients est mélangé et chauffé sous cisaillement modéré à 100° C.

Le produit est refroidi à 90° C et transféré dans la deuxième cuve de dosage de la machine. Ce produit utilisé en fourrage a un extrait sec de 42 %, un rapport matière grasse/extrait sec de 56 % et un pH de 5,6.

Les deux pâtes sont simultanément dosées et introduites dans l'emballage selon le procédé "one-shot". Le produit fini est une bouchée de 20 g conditionnée dans une coquille de type bi-coque en plastique et fermée hermétiquement, puis refroidi

La pâte externe est ferme, de couleur orangée et le fourrage est fondant en bouche, de couleur crème et au goût typique de Brie.

On obtient un contraste de couleur, de texture et de goût entre les deux pâtes.

### EXEMPLE 2

### Produit fourré pour utilisation culinaire

### Formulation du constituant de la coque externe :

- emmenthal 23 %
- cheddar 24 %
- beurre 8 %
- caséine 3 %
- poudre de blanc d'oeuf 4 %
- sels de fonte 1,5%
- NaCI 0,6 %
- carraghénanes 0,9 %
- eau 35 %.

Tous les ingrédients, sauf la poudre de blanc d'oeuf, sont mélangés et chauffés sous cisaillement relativement intense à 100° C.

Le produit est refroidi à 60° C et la poudre de blanc d'oeuf est alors incorporée au produit sous faible agitation. L'ensemble est transféré dans l'une parmi deux cuves de dosage d'une installation telle qu'illustrée à la figure 1.

La post-incorporation du blanc d'oeuf à 60° C permet d'éviter que les protéines coagulent pendant l'opération de cuisson. On obtient ainsi un produit élastique, malléable, totalement adapté pour être utilisé comme pâte externe. Il a un extrait sec de 45 %, un rapport matière grasse /extrait sec de 45 % et un pH de 5,40.

### Formulation du fourrage :

La pâte interne utilisée pour le fourrage est fabriquée simultanément et parallèlement à la pâte externe utilisée pour la coque externe.
- fromage pâte persillée 12 %
- autres fromages (gouda, cheddar) 10 %
- beurre 18 %
- lactosérum en poudre 2,7 %
- lait écrémé 6 %
- caséine 4,5 %
- sels de fonte 2 %
- NaCl 0,5 %
- réemploi (préfonte) 5 %
- eau 44,3%.

### Procédé de préparation :

Les ingrédients sont mélangés et chauffés sous cisaillement intense à 110° C.

Le produit est refroidi à 60° C et transféré dans la deuxième cuve de dosage de l'installation. Ce produit utilisé en fourrage a un extrait sec de 43 %, un rapport matière grasse /extrait sec de 51,5 % et un pH de 5,6.

Les deux pâtes sont dosées simultanément selon le procédé "one-shot".

Le produit fini pèse 50 g. Il est conditionné dans une barquette d'aluminium, laquelle est hermétiquement scellée.

Par "réemploi" ou "préfonte", on entend un fromage fondu gélifié par crémage issu d'une fonte précédente de même composition et qui servira d'amorce à la formation du réseau protéique. De façon traditionnelle ou fabrication de fromage fondu, ce composé est ajouté à raison de 3 à 6 % de la formule

## Revendications

1. Procédé de fabrication d'un produit à base de fromage du type comportant une coque externe et un fourrage interne totalement inclus dans la coque externe, au moins ladite coque externe étant obtenue à partir d'un fromage fondu présentant une aptitude au crémage, ce procédé comprenant les étapes suivantes :
- on dose et on introduit simultanément, à une température supérieure à la température de gélification du fromage fondu constituant la coque externe, le constituant formant la coque externe et le constituant formant le fourrage dans un moule intermédiaire ou un emballage définitif, et
- on refroidit lesdits constituants à une température inférieure à la température de gélification de la pâte fromagère fondue constituant la coque externe.

2. Procédé selon la revendications 1, **caractérisé en ce que** le co-dosage et l'introduction simultanée dans le moule ou l'emballage des constituants sont réalisés à une température comprise entre 70 et 90° C.

3. Procédé selon les revendications 1 ou 2, **caractérisé en ce que** la température de refroidissement est inférieure à 50°C.

4. Procédé selon l'une quelconque des revendications 1 à 3, **caractérisé en ce qu'**au moment du co-dosage et de l'introduction simultanée dans le moule ou l'emballage, lesdits constituants présentent un écart de pH non supérieur à 0,5.

5. Procédé selon l'une quelconque des revendications 1 à 4, **caractérisé en ce qu'**au moment du co-dosage et de l'introduction simultanée dans le moule ou l'emballage, lesdits constituants présentent un écart d'extrait sec non supérieur à 5 %.

6. Produit composite à base de fromage comportant une coque externe obtenue à partir d'un fromage fondu présentant une aptitude au crémage et un fourrage interne constitué par du fromage fondu totalement inclus dans la coque externe.

7. Produit composite à base de fromage selon la revendication 6, **caractérisé en ce qu'**il est formé par co-dosage à chaud et introduction simultanée dans un moule intermédiaire ou emballage définitif des constituants formant respectivement la coque externe et l'enrobage.

8. Produit composite à base de fromage selon les revendications 6 ou 7, **caractérisé en ce que** la coque externe constitue 50 à 90 % en poids par rapport au poids total du produit fini.

9. Produit composite à base de fromage selon les revendications 6 à 8, **caractérisé en ce que** le fourrage interne représente 10 à 50 % en poids par rapport au poids du produit fini.

10. Produit composite à base de fromage selon les revendications 6 à 9, **caractérisé en ce que** la pâté fromagère contient des protéines d'oeuf ou des protéines sériques.

11. Produit composite à base de fromage selon les revendications 6 à 10, **caractérisé en ce qu'**il est conditionné dans un emballage d'aluminium de qualité alimentaire.

12. Produit composite à base de fromage selon les revendications 6 à 10, **caractérisé en ce qu'**il est conditionné dans une coquille de type bi-coque.

13. Produit composite à base de fromage selon les revendications 6 à 10, **caractérisé en ce qu'**il est conditionné dans une coupelle fermée à l'aide d'un opercule.

14. Produit composite à base de fromage selon les revendications 6 à 10, **caractérisé en ce qu'**il a un grammage compris entre 5 et 200 g.

## Claims

1. Process for the manufacture of a cheese-based product of the type comprising an external shell and an internal filling which is completely enclosed in the external shell, at least the said external shell being obtained from a processed cheese having creaming capacity, this process comprising the following stages:
- the constituent forming the external shell and the constituent forming the filling are simultaneously metered and simultaneously introduced, at a temperature greater than the gelling temperature of the processed cheese constituting the external shell, into an intermediate mould or a final packaging, and
- the said constituents are cooled to a temperature of less than the gelling temperature of the processed cheese paste constituting the external shell.

2. Process according to Claim 1, **characterized in that** the co-metering and the simultaneous introduction into the mould or the packaging of the constituents are carried out at a temperature of between 70 and 90°C.

3. Process according to Claims 1 or 2, **characterized in that** the cooling temperature is less than 50°C.

4. Process according to any one of Claims 1 to 3, **characterized in that** at the time of the co-metering and the simultaneous introduction into the mould or the packaging, the said constituents have a difference in pH not greater than 0.5.

5. Process according to any one of Claims 1 to 4, **characterized in that** at the time of the co-metering and the simultaneous introduction into the mould or the packaging, the said constituents have a difference in dry extract not greater than 5%.

6. Cheese-based composite product comprising an external shell obtained from a processed cheese having creaming capacity and an internal filling consisting of processed cheese which is completely enclosed in the external shell.

7. Cheese-based composite product according to Claim 6, **characterized in that** it is formed by co-metering in the hot state and simultaneous introduction into an intermediate mould or a final packaging of the constituents forming the external shell and the coating respectively.

8. Cheese-based composite product according to Claims 6 or 7, **characterized in that** the external shell constitutes 50 to 90% by weight relative to the total weight of the finished product.

9. Cheese-based composite product according to Claims 6 to 8, **characterized in that** the internal filling represents 10 to 50% by weight relative to the weight of the finished product.

10. Cheese-based composite product according to Claims 6 to 9, **characterized in that** the cheese paste contains egg proteins or serum proteins.

11. Cheese-based composite product according to Claims 6 to 10, **characterized in that** it is packaged in a food grade aluminium packaging.

12. Cheese-based composite product according to Claims 6 to 10, **characterized in that** it is packaged in a bi-shell type shell.

13. Cheese-based composite product according to Claims 6 to 10, **characterized in that** it is packaged in a dish closed with the aid of a lid.

14. Cheese-based composite product according to Claims 6 to 10, **characterized in that** it has a weight of between 5 and 200 g.

## Patentansprüche

1. Verfahren zur Herstellung eines Erzeugnisses auf der Basis eines Käses, der eine Rinde und einen vollständig von dieser umschlossenen Kern umfasst, wobei mindestens die Rinde aus einem Schmelzkäse erhalten ist, der die Fähigkeit zum Eindicken besitzt, das die Stufen
- Gleichzeitiges Dosieren und Füllen des die Rinde bildenden Bestandteils und des den Kern bildenden Bestandteils bei einer Temperatur von oberhalb der Geliertemperatur des die Rinde bildenden Schmelzkäses in eine Zwischenform oder eine endgültige Verpackung und
- Abkühlen der Bestandteile auf eine Temperatur von unterhalb der Erstarrungstemperatur der die Rinde bildenden geschmolzenen Käsemasse
umfasst.

2. Verfahren nach Anspruch 1, **dadurch gekennzeichnet, dass** das gleichzeitige gemeinsame Dosieren und Füllen der Bestandteile in die Form oder die Verpackung bei einer Temperatur von 70 bis 90 °C durchgeführt wird.

3. Verfahren nach Anspruch 1 oder 2, **dadurch gekennzeichnet, dass** die Abkühlungstemperatur unter 50 °C liegt.

4. Verfahren nach einem der Ansprüche 1 bis 3, **dadurch gekennzeichnet, dass** die Differenz der pH-Werte der Bestandteile zum Zeitpunkt des gleichzeitigen gemeinsamen Dosierens und Füllens in die Form oder die Verpackung nicht mehr als 0,5 beträgt.

5. Verfahren nach einem der Ansprüche 1 bis 4, **dadurch gekennzeichnet, dass** die Differenz der Trockenmassen der Bestandteile zum Zeitpunkt des gleichzeitigen gemeinsamen Dosierens und Füllens in die Form oder die Verpackung nicht mehr als 5 % beträgt.

6. Verbunderzeugnis auf der Basis eines Käses, der eine Rinde, die aus einem Schmelzkäse, der die Fähigkeit zum Eindicken besitzt, erhalten ist, und einen Kern, der aus vollständig von der Rinde umschlossenem Schmelzkäse besteht, umfasst.

7. Verbunderzeugnis auf Käsebasis nach Anspruch 6, **dadurch gekennzeichnet, dass** es durch gleichzeitiges gemeinsames Dosieren und Füllen der Bestandteile, welche die Rinde bzw. die Umhüllung bilden, in eine Zwischenform oder eine endgültige Verpackung gebildet worden ist.

8. Verbunderzeugnis auf Käsebasis nach Anspruch 6 oder 7, **dadurch gekennzeichnet, dass** die Rinde 50 bis 90 Gew. % des Gesamtgewichts des fertigen Erzeugnisses ausmacht.

9. Verbunderzeugnis auf Käsebasis nach den Ansprüchen 6 bis 8, **dadurch gekennzeichnet, dass** der Kern 10 bis 50 Gew. % des Gewichts des fertigen Erzeugnisses ausmacht.

10. Verbunderzeugnis auf Käsebasis nach den Ansprüchen 6 bis 9, **dadurch gekennzeichnet, dass** die Käsemasse Eiproteine oder Serumproteine enthält.

11. Verbunderzeugnis auf Käsebasis nach den Ansprüchen 6 bis 10, **dadurch gekennzeichnet, dass** es in einer Verpackung aus lebensmitteltauglichem Aluminium enthalten ist.

12. Verbunderzeugnis auf Käsebasis nach den Ansprüchen 6 bis 10, **dadurch gekennzeichnet, dass** es in einer aus zwei Hälften bestehenden Form verpackt ist.

13. Verbunderzeugnis auf Käsebasis nach den Ansprüchen 6 bis 10, **dadurch gekennzeichnet, dass** es in einem mit einem Deckel verschlossenen Napf verpackt ist.

14. Verbunderzeugnis auf Käsebasis nach den Ansprüchen 6 bis 10, **dadurch gekennzeichnet, dass** sein Flächengewicht 5 bis 200 g beträgt.
